Europäisches Patentamt

European Patent Office

Office européen des brevets

(11) Publication number: **0 027 107**
**B1**

(19)

# EUROPEAN PATENT SPECIFICATION

(45) Date of publication of patent specification: **02.07.86**

(21) Application number: **79901073.1**

(22) Date of filing: **16.04.79**

(86) International application number:
**PCT/US79/00240**

(87) International publication number:
**WO 80/02254 30.10.80 Gazette 80/25**

(51) Int. Cl.⁴: **B 32 B 7/08, B 64 C 1/12,
B 64 C 3/26, F 16 B 5/00**

(54) **Method of fastening a composite sub-structure and structural assembly.**

(43) Date of publication of application:
**22.04.81 Bulletin 81/16**

(45) Publication of the grant of the patent:
**02.07.86 Bulletin 86/27**

(84) Designated Contracting States:
**DE FR GB SE**

(56) References cited:
**GB-A- 557 694
US-A-1 504 817
US-A-1 519 772
US-A-1 901 864
US-A-2 053 048
US-A-2 140 558
US-A-2 161 802
US-A-2 483 916
US-A-2 737 227
US-A-2 808 355
US-A-3 468 274
US-A-3 996 084
US-A-4 059 468
US-A-4 133 711**

(73) Proprietor: **GRUMMAN AEROSPACE
CORPORATION
South Oyster Bay Road
Bethpage, NY 11714 (US)**

(72) Inventor: **Forsch, Hans H.
16 Essex Drive
Northport, NY 11768 (US)**

(74) Representative: **Lambert, Hugh Richmond et al
D. YOUNG & CO. 10 Staple Inn
London, WC1V 7RD (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Description

Since the earliest days in the application of skin coverings for load carrying structure, especially in the art of aeroplane construction, those skilled in the art have sought for fasteners that would accommodate shear and tensile loading between skin and its sub-structure.

In the prior art, one can observe United States Patent Nos. 1,504,817; 1,519,772; 1,901,864; 2,053,048; 2,161,802 and 2,483,916 as examples of how one can use stitching to fasten a skin to a sub-structure. In these, one is taught to use an intermediate tape or the like that is attached to such sub-structure and the skin is fastened to the tape by stitching. Attention may also be directed to the method of attachment of the fabric of an aeroplane wing to the stiffening ribs or cap-strips of the wing structure disclosed in U.S. Patent No. 2140558.

In more detail, US—A—1,504,817 discloses a method of fastening a fabric covering to the underlying rib structure of an aircraft wing. In this method each rib or web is provided with a cap strip nailed thereto along one or both sides. Clamped between the cap strip and the web on one side only or folded over the end of the web and clamped on both sides is a fabric strip which either has a cord sewn thereto along one edge and running parallel with the web, in the case of a single cap strip, or simply positioned under the fabric strip in the case of a fabric folded over the web and clamped by cap strips on both sides. The wing covering is then stretched over the rib structure and stitched along the length of the webs or ribs to the cords which run along the surface of those webs and held by said fabric strips clamped to the webs by said cap strips. In an alternative arrangement the fabric strip is simply wound around a strip nailed to the web, and the wing cover stitched to that.

In US—A—2,053,048 another method is disclosed for fastening the fabric cover to the underlying rib structure of an aircraft wing. In this case, the underlying web or rib has an outwardly directed channel or groove in it and over which is stretched a fabric strip which is stapled to the web on opposite sides of the groove. The wing cover is stretched over the ribs and stitched to the fabric strips along the line of the groove.

In US—A—2,140,558 the cap strip on the web of an aircraft wing structure comprises two angle strips riveted together in back to back relationship but with offset positions adjacent the end flanges to provide a space therebetween into which a fold in the fabric wing covering is tucked and wedged by means of a load bearing strip forced into the space inside the folded fabric. The fabric is then pinned by a pin passing through the cap strips and the load bearing strip.

Those skilled in the art today have, however, come to rely on mechnaical fasteners. They have become so dependent upon such that it is unheard of to attempt any other form of fastening. To follow this practice in composite structure fastening drives the cost of final assembly upwards because of special drilling and reinforcement requirements and the use of fasteners made from more expensive materials to prevent serious corrosion problems in service.

Nevertheless, the present day fastener fraternity, when asked to study assembly of new materials, consider it to be revolutionary to address the problem of composite structure assembly with other than today's conventional, mechanical fasteners or bonding techniques. Therefore, it is the intent of this disclosure to teach such skilled in the art how to take a leaf from the past and improve upon it so as to avoid expensive techniques that are not required. In particular, the present invention resorts to the technique of stitching together composite panels and composite sub-structures to improve the strength of the bond formed therebetween.

According to the present invention, there is provided a method for fastening a curable composite sub-structure to a curable composite panel which comprises:

a) placing the panel on a support having parallel slots;

b) placing a finite width composite "L"-shaped or inverted "T"-shaped sub-structure on said panel with its flange in contact with the panel and with its stem parallel to the slots and so positioned that the lines of intersection on said sub-structure between its stem and its flange fall within the width of the or sufficiently close thereto that the stem obstructs the opening of a stitch line in the flange;

c) opening a stitching line over the slot through said flange on the or one side of the stem of the sub-structure parallel with said line of intersection defined under (b) above by bending back the stem of the sub-structure along said line of intersection;

d) running a stitching apparatus along the stitching line to stitch together the panel and the said sub-structure;

e) in the case of a T-shaped sub-structure, repeating steps c) and d) on the other side of the stem; and

f) curing the panel and sub-structure as stiched thereto.

In a particularly preferred embodiment of this general technique two L-shaped structures are successively stitched to the panel in reversed relationship, i.e. with their respective vertical stands directed towards but spaced from each other thereby to form a beam cap on the panel to which can then be secured a web member positioned between the two L-shaped structures and extending perpendicular to the base panel.

In an alternative technique, an inverted T-shaped composite structure is placed on the panel, composed for example of two L-shaped composites in back-to-back relation and stitched thereto on both sides of the vertical stand, by bending the vertical stand first one way then the other and running the stitching apparatus in turn along each side of the vertical stand. If desired additional layers can be superimposed on the inverted T-shaped structure, before or after stitching, to build a laminated composite web extending substantially perpendicular to the panel and secured thereto via the inverted T-shaped sub-structure.

Also according to the invention, there is provided a structural assembly including a means of joining the various elements intended to optimize the absorption of joint loading, said assembly including a composite panel and a composite sub-structure or beam cap bonded thereto by curing, wherein said cap is additionally secured to the panel by stitching along the bond lines. The bonding means is provided to locally secure the cap on the panel together with stitching reinforcing the bonding means and located to accommodate joint loadings directionally destructive to the bonding means.

The invention will be better understood from the following non-limiting description of examples thereof given with reference to the accompanying drawings in which:—

Figure 1 is an isometric showing of an apparatus for stitching a composite panel to composite sub-structure by the method of this invention;

Figure 2 is a part section of a composite panel with a composite sub-structure in the process of being stitched thereto by the method of the invention;

Figure 3 is a part section of the composite panel and sub-structure of Figure 2 in a second stage of manufacture by the method of this invention;

Figure 4 is an end view of a composite panel and sub-structure assembled in accordance with this invention;

Figure 5 is an enlarged part section of the panel and sub-structure in the course of manufacture in the apparatus of Figure 1;

Figure 6 is an enlarged part section of a composite panel and sub-structure assembled as per this invention at the end of the second stage of manufacture and ready to be mated to further sub-structure to provide a complete assembly as shown in Figure 10;

Figures 7, 8 and 9 are illustrations of a sequence of assembly steps in accordance with another alternative technique according to this invention and showing the composite panel sub-structure in end view and at various stages of manufacture;

Figure 10 is an enlarged view of the completed assembly produced by the method described with reference to Figures 1—3 and 5—6;

Figure 11 is a variant of the technique described with reference to Figures 7—9;

Figure 12 is a graphical illustration of the improved characteristics of attachments according to the present invention as compared with the more common techniques of fastening.

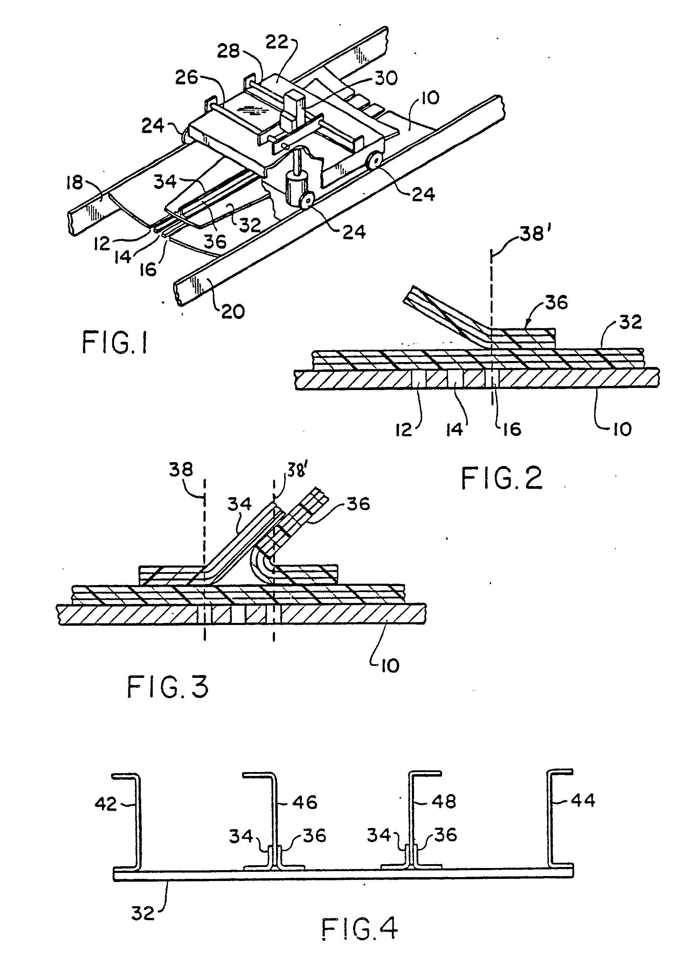

Referring now to Figure 1, there is shown a stitching apparatus for use in the method of this invention which comprises a firm support 10 having slots 12, 14 and 16. The support is held between two rails 18 and 20. A platform 22 is provided with wheels (i.e. 24) that will hold the platform to the rail and control its movement therealong. It is desired that numerical control devices be utilized with motors on the platform to control its movement along the rail means, all as possible by one skilled in the art of modern day machinery.

On the platform on rods 26 and 28 is a Landis Model 77 chain stitcher 30 familiar to those skilled in the art of leather stitching. Stitcher 30 is provided also with means to control side to side motion of it relative to the platform. One such means (not shown) within the knowledge of one skilled in the art is to have gear racks on the side of the rods with gears synchronously driven on the stitcher support. In any event, the stitcher 30 demonstrated has the capability of sewing various thicknesses of filament reinforced composite materials and large components, e.g. a panel 32 such as a wing panel, and L-shaped composite sub-structures 34 and 36 as shown and to which a stiffening web member 46, 48 can be secured as in Figure 4.

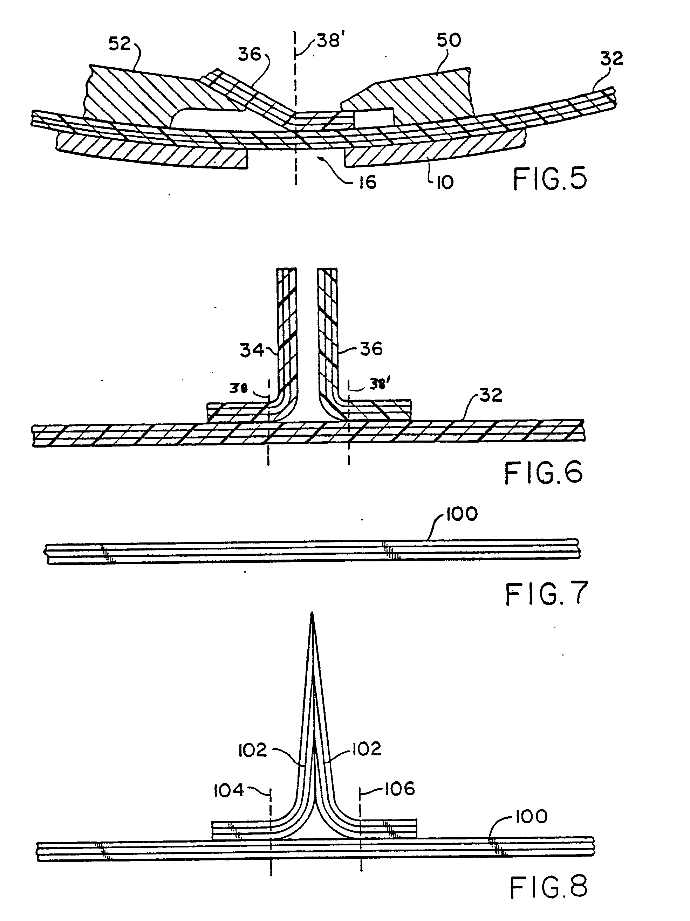

A better idea of the stitching technique is shown with reference to Figure 2 where the panel 32 has laid thereover several laminations that are to comprise an L-shaped sub-structure or beam cap 36. This lay-up is produced while the composites are still in the "wet" (tacky) state. The stitcher then sews along an axis through the slot 16, as shown by dash line 38'. Thereafter, the stitcher 30 is moved over to repeat the sewing process for a second L-shaped structure beam cap 34 (see Figure 3) which is stitched to the panel in like manner along line 38 but in inverse relation, i.e. so that the two L-shaped structures are in spaced back-to-back relation, see Figure 6. In these sewing steps, the vertical stand of the beam caps 36 and then 34 are bent over to open up the stitch area. This will be further described with reference to Figure 5 hereinbelow.

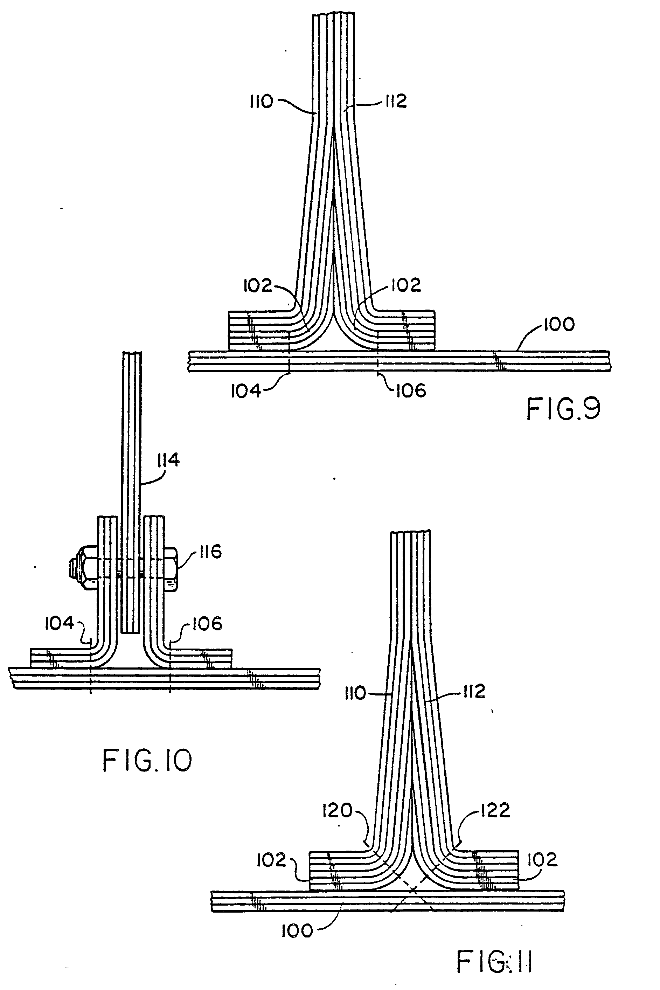

Now with reference to Figure 4 and Figure 10, there is shown a completed composite panel and sub-structure possible with this invention showing panel 32 with two end caps 42 and 44 and two intermediate webs 46 and 48 each positioned between and secured to two L-shaped beam caps 34 and 36 as shown in Figure 10.

Getting back to the assembly technique, there is shown in Figure 5 the composite panel 32 laid upon the support 10 and the L-shaped composite beam cap 36 laid thereover to lie under one edge 50 and over another edge 52 of a sewing guide. Stitching takes place along the dash line 38' through the slot 16 in the support 10 as in Figure 2.

The two sub-structures 34 and 36 are stitched (shown by dash lines 38, 38') to the panel in such a way that any tensile loading is carried by the stitching. It should be noted that as the stitching may be completed while the materials are still "wet" (tacky) so-to-speak, there will be additional bond lines between not only the composite materials, but between the materials and the stitching. Preferably the panel and the L-shaped composite sub-structures are warmed before stitching. Depending on the nature of the composite materials, threads used for this stitching have so far comprised graphite, nylon, fiberglass, polyester, Kelvar (Registered Trade Mark). Following stitching the panel 32 and the two L-shaped sub-structures 34 and 36 are cured to provide a cured structure as shown in Figure 6 which is ready to accept a web member; i.e. 46 or 48 as seen in Figure 4, or 114 as shown in Figure 10.

With reference to Figure 10, a bonding agent is used to hold the web 114 temporarily in place between the cured and stitched L-shaped sub-structures 34, 36 whilst a series of holes are machined through the beam caps and the web to receive a mechanical fastening means e.g. a bolt 116. The assembly is then completed as shown in Figure 10 by inserting the mechanical fastening means 116 through beam caps 34 and 36 with web member 114 interposed.

Referring to the alternative technique of this invention described with reference to Figures 7—9 and 11, one starts with a composite panel 100 formed by a predetermined lay-up of graphite, fiberglass, nylon, polyester, Kelvar filament reinforced resin matrix (either thermoplastic or thermosetting). See U.S. Patent No. 4,133,711 for a process to lay-up such a panel. To that, one stitches in a manner similar to that previously described an inverted T-shaped slug comprised of two L-shaped composite sub-structures 102 of similar construction as panel 100 in contiguous back-to-back relation. These elements are stitched to the panel 100 in the "wet" condition along the stitching lines 104 and 106 optionally with preheating to between 130°F (54°C) and 150°F (66°C). Next composite web members 110 and 112 are laid over the lateral and vertical surfaces of the inverted T-shaped slug and held thereto and thereabove to each other by a bonding agent. The lay-up is then cured by means and at temperatures known to one skilled in the art.

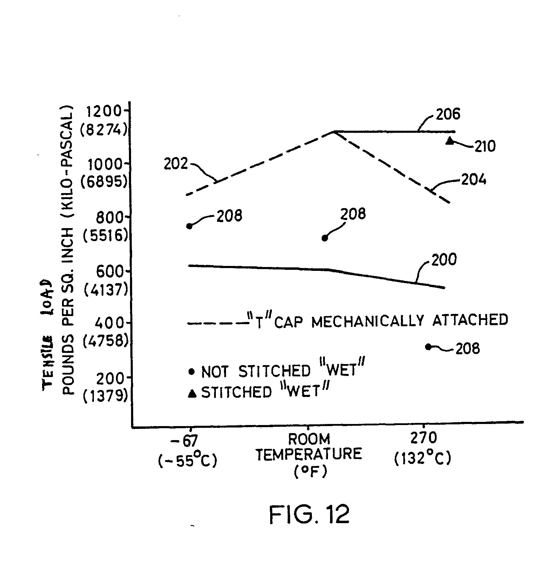

It should be noted in reference to Figure 11, that it is possible to delay stitching of the T-shaped slug to the panel 100 to a time after placement and bonding of the web members 110 and 112 thereto. Further such stitching could also be at an angle to vertical stand and horizontal leg of each respective L-shaped sub-structure which constitutes the beam cap (stitching lines 120 and 122: see Figure 11), to accommodate a wider variety of tensile loadings between the panel 100 and its sub-structure.

With final reference to the drawings, Figure 12 shows in graphical form the heretofore unrecognized advantages of this invention in assembly of composites. Line 200 represents the performance of a composite assembly of the elements above-described without stitching. Line 202 represents the performance of such structure mechanically assembled and stitch assembled. Line 204 represents the performance of a composite assembly by way of mechanical fasteners above room temperature, and line 206 is representative of the same assembly using instead of mechanical fasteners, the stitching process hereby disclosed. Points 208 represent characteristics of non-stitched (bonded only) composite assembly exposed to a wet environment. Point 210 is representative of the high temperature characteristic for a stitched composite assembly.

As illustrated by Figure 12, the tensile characteristics investigated were for an environment from −67°F (−55°C) to 270°F (132°C) and illustrates the tensile load capability dry and wet.

The constructions to date have all exhibited the ability to accommodate, better than mechanical fastening or bonding, the high-stress concentrations under the beam caps that are caused primarily by the bending of the panel and mismatching of axial strains at adjacent faces of panel and sub-structure. With this invention, the combined flatwise tension, transverse tension and shear stresses are all accommodated and even when failed in local areas, the stitches act as a form of crack stopper to the spread of assembly failure. In other words, with this invention, it is possible to realise in composite panel and sub-structure assembly an ultimate strength for such assembly independent of bond failure to load limitations. As such, it is now possible in following this invention to use composites in environments where they have to resist torsion and pressure; i.e., a wing skin about a fuel tank.

**Claims**

1. A method of fastening a curable composite sub-structure to a curable composite panel comprising the following steps;

a) placing the panel (32, 100) on a support (10) having parallel slots (12, 16);

b) placing a finite width composite "L"-shaped or inverted "T"-shaped sub-structure (36, 102) on said panel (32, 100) with its flange in contact with the panel and with its stem parallel to the slots and so positioned that the lines of intersection on said sub-structure between its stem and its flange fall within the width of the slots (12, 16) or sufficiently close thereto that the stem obstructs the opening of a stitch line in the flange;

c) opening a stitching line (38′, 104, 106, 120, 122) over the slot through said flange on the or one side of the stem of the sub-structure parallel with said line of intersection defined under (b) above by bending back the stem of the sub-structure (36, 102) along said line of intersection;

d) running a stitching apparatus along the stitching line to stitch together the panel and the said sub-structure;

e) in the case of a T-shaped sub-structure, repeating steps (c) and (d) on the other side of the stem; and

f) curing the panel and sub-structure as stitched thereto.

2. A method according to claim 1, wherein the said sub-structure (36) is "L"-shaped and further comprising, before the curing stage, the steps of:

f) placing a second L-shaped composite sub- structure (34) on said panel parallel with said first sub-structure and such that its stem and that of the first sub-structure (36) are directed towards but spaced from each other, whilst the line of intersection defined under (b) above — for the second sub-structure — falls immediately adjacent or within the width of another slot (12),
and repeating steps (c) and (d) with respect to said second sub-structure.

3. A method according to claim 2 including the additional step of securing a composite web member (46, 48, 114) between the stems of the two L-shaped sub-structures after the stitching thereof to the panel, but before curing, the composite web member thus becoming bonded to the L-shaped structures during curing.

4. A method according to claim 1, wherein the said sub-structure (102) is an inverted "T"-shaped sub-structure and is formed by two "L"-shaped composite sub-structures in contiguous back-to-back relationship.

5. A method according to claim 4, comprising the further step (i) of laying over and bonding to said inverted "T"-shaped sub-structure (102), composite web members (110, 112) perpendicularly to the plane of the panel.

6. A method according to claim 5, wherein the said step (i) is executed after the step (d) but before step (f).

7. A method according to claim 5, wherein the said step (i) is executed before the step (d).

8. A method according to any one of claims 1 to 7, characterised in that prior to stitching the or each L-shaped or T-shaped sub-structure to the panel, the panel and respective sub-structure are warmed.

9. A structural assembly including a composite panel (32, 100) and a composite sub-structure or beam cap (34, 36, 102) bonded thereto by curing, wherein said cap is additionally secured to the panel by stitching along the bond lines.

10. An assembly according to claim 9, caracterised in that the sub-structure or beam cap is constituted by two L-shaped composite sub-structures (34, 36) stitched and bonded by curing to the base panel (32) in spaced apart relation with their respective stems opposed one to the other, and in that a composite web member (114) is bonded between said vertical stands of the two L-shaped sub-structures constituting the beam cap.

11. An assembly according to claim 9, characterised in that the sub-structure or beam cap is an inverted "T"-shaped sub-structure which is constituted by two composite L-shaped sub-structures (102) stitched and bonded by curing to the panel (100) in contiguous back-to-back relation, the stems of which are interposed and bonded between adjacent layers of composite web members (110, 112).

12. An assembly according to claim 10, further comprising mechanical fastener means (116) further connecting the composite web member (114) to the sub-structure or beam cap (34, 26).

13. An assembly according to any one of claims 9 to 12, characterised in that the stitches are at an angle to the vertical stand and horizontal leg of each respective L-shaped sub-structure which constitutes the beam cap.

## Revendications

1. Procédé de fixation d'une substructure composite vulcanisable à un panneau composite vulcanisable comprenant les opérations consistant à:

(a) placer le panneau (32, 100) sur un support (10) ayant des encoches parallèles (12, 16);

(b) placer une substructure en "L" ou en "T" inversé composite de largeur finie (36, 102) sur ledit panneau (32, 100), son rebord étant en contact avec le panneau et son âme étant parallèle aux encoches, et disposée de telle manière que les lignes d'intersection de ladite substructure entre son âme et son rebord se situent dans la largeur des encoches (12, 16), ou suffisamment près de celles-ci pour que l'âme obstrue l'ouverture d'une ligne de points dans le rebord;

(c) ouvrir une ligne de points (38', 104, 106, 120, 122) par-dessus l'encoche à travers ledit rebord sur le ou un côté de l'âme de la substructure parallèlement à ladite ligne d'intersection définie en (b) ci-dessus, en repliant l'âme de la sub-structure (36, 102) le long de ladite ligne d'intersection;

(d) faire passer un appareil à piquer le long de la ligne de points pour coudre l'un à l'autre le panneau et ladite substructure;

(e) dans le cas d'une substructure en "T", répéter les opérations (c) et (d) de l'autre côté de l'âme; et

(f) vulcaniser le panneau et la substructure qui lui est cousue.

2. Procédé selon la revendication 1, caractérisé en ce que ladite substructure (36) est en forme de "L" et en ce qu'il comprend en outre, avant l'étape de vulcanisation, les opérations consistant à:

(f) placer une seconde substructure composite en "L" (34) sur ledit panneau parallèlement à ladite première substructure et de telle manière que son âme et que celle de la première substructure (36) soient dirigées l'une vers l'autre, mais espacées l'une de l'autre, la ligne d'intersection définie en (b) ci-dessus — pour la seconde substructure — se situant à proximité immédiate de, ou dans, la largeur d'une autre encoche (12);
et à répéter les opérations (c) et (d) pour ladite seconde substructure.

3. Procédé selon la revendication 2, caractérisé en ce qu'il comporte l'opération supplémentaire consistant à fixer une nervure composite (46, 48, 114) entre les âmes des deux substructures en "L" après qu'elles ont été cousues au panneau, mais avant vulcanisation, la nervure composite se trouvant alors liée aux substructures en "L" pendant la vulcanisation.

4. Procédé selon la revendication 1, caractérisé en ce que ladite substructure (102) est une substructure en "T" inversé et en ce qu'elle est formée de deux substructures composites en "L" disposées de façon contiguë dos à dos.

5. Procédé selon la revendication 4, caractérisé en ce qu'il comprend l'opération supplémentaire (i) consistant à déposer sur ladite substructure en "T" inversé (102) et à y lier des nervures composites (110, 112) perpendiculairement au plan du panneau.

6. Procédé selon la revendication 5, caractérisé en ce que ladite opération (i) est exécutée après l'opération (d) mais avant l'opération (f).

7. Procédé selon la revendication 5, caractérisé en ce que ladite opération (i) est exécutée avant l'opération (d).

8. Procédé selon l'une quelconque des revendications 1 à 7, caractérisé en ce qu'avant la couture de la ou de chaque substructure en "L" ou en "T" au panneau, le panneau et la substructure respective sont chauffés.

9. Ensemble de structure comportant un panneau composite (32, 100) et une substructure ou chape de poutrelle composite (34, 36, 102) liée à celui-ci par vulcanisation, caractérisé en ce que ladite chape est en outre fixée au panneau par couture le long des lignes de liaison.

10. Ensemble selon la revendication 9, caractérisé en ce que la substructure ou la chape de poutrelle est constituée de deux substructures composites en L (34, 36) cousues et liées par vulcanisation au panneau de base (32), celles-ci étant espacées l'une de l'autre et leurs montants respectifs étant opposés l'un à l'autre, et en ce qu'une nervure composite (114) est liée entre lesdits montants verticaux des deux substructures en "L" constituant la chape de poutrelle.

11. Ensemble selon la revendication 9, caractérisé en ce que la substructure ou chape de poutrelle est une substructure en "T" inversé qui est constituée de deux substructures en "L" composites (102) cousues et liées par vulcanisation au panneau (100), celles-ci étant disposées de façon contiguë dos à dos, et leurs montants étant interposés et liés entre des couches adjacentes de nervures composites (110, 112).

12. Ensemble selon la revendication 10, caractérisé en ce qu'il comprend en outre des moyens de fixation mécaniques (116) reliant de façon supplémentaire la nervure composite (114) à la substructure ou chape de poutrelle (34, 26).

13. Ensemble selon l'une quelconque des revendications 9 à 12, caractérisé en ce que les points sont effectués avec un certain angle par rapport au montant vertical et à la patte horizontale de chaque substructure en "L" respective qui constitue la chape de poutrelle.

**Patentansprüche**

1. Verfahren zur Befestigung eines aushärtbaren Verbundunterbaues an einer aushärtbaren Verbundplatte, gekennzeichnet durch folgende Verfahrensschritte:

a) Anordnen der Platte (32, 100) auf einer Auflage (10), die parallele Schlitze (12, 16) aufweist;

b) Anordnen eines eine begrenzte Breite aufweisenden "L"-förmigen oder umgekehrt "T"-förmigen Verbundunterbaus (36, 102) auf der Platte (32, 100), wobei sein Flansch mit der Platte in Berührung ist und sein Schaft zu den Schlitzen parallel und derart positioniert ist, daß die Kreuzungslinien des Unterbaus zwischen seinem Schaft und seinem Flansch innerhalb der Breite der Schlitze (12, 16) oder ausreichend eng daneben liegen, so daß der Schaft die Öffnung einer Heftlinie im Flansch versperrt;

c) Öffnen einer Heftlinie (38', 104, 106, 120, 122) über dem Schlitz durch den Flansch auf der oder auf einer Seite des Schaftes des Unterbaus parallel zu der unter (b) bestimmten Kreuzungslinie durch Zurückbiegen des Schaftes des Unterbaus (36, 102) entlang der Kreuzungslinie;

d) Bewegen eines Heftgerätes entlang der Heftlinie zum Zusammenheften der Platte und des Unterbaus;

e) Wiederholung der Verfahrensschritte (c) und (d) auf der anderen Seite des Schaftes, wenn der Unterbau "T"-förmig ist; und

f) Aushärten der Platte und des angehefteten Unterbaus.

2. Verfahren nach Anspruch 1, dadurch gekennzeichnet, daß der Unterbau (36) "L"-förmig ist und das vor der Aushärtung die folgenden Verfahrensschritte durchgeführt werden:

f) Anordnen eines zweiten "L"-förmigen Verbundunterbaus (34) auf der Platte parallel zum ersten Unterbau und derart, daß sein Schaft und der des ersten Unterbaus (36) einander zugewandt aber voneinander beabstandet sind, während die unter (b) bestimmte Kreuzungslinie des zweiten Unterbaus unmittelbar neben oder innerhalb der Breite eines anderen Schlitzes (12) liegt, und

Wiederholung der Verfahrensschritte (c) und (d) bezüglich des zweiten Unterbaus.

3. Verfahren nach Anspruch 2, gekennzeichnet durch den zusätzlichen Verfahrenschritt des Befestigens eines Verbundstegelementes (46, 48, 114) zwischen den Schäften der beiden "L"-förmigen Unterbauten nach deren Heftung an die Platte aber vor der Aushärtung, wodurch das Verbundstegelement während der Aushärtung an die "L"-förmigen Unterbauten gebunden wird.

4. Verfahren nach Anspruch 1, dadurch gekennzeichnet, daß der Unterbau (102) ein umgekehrt "T"-förmiger Unterbau ist, der durch zwei "L"-förmige Verbundunterbauten gebildet ist, die Rücken an Rücken aneinanderstoßen.

5. Verfahren nach Anspruch 4, gekennzeichnet durch den zusätzlichen Verfahrensschritt (i) Umlegen und Bonden des Verbundstegelementes (110, 112) an den umgekehrt "T"-förmigen Unterbau (102) senkrecht zur Ebene der Platte.

6. Verfahren nach Anspruch 5, dadurch gekennzeichnet, daß der Verfahrensschritt (i) nach dem Verfahrensschritt (d) aber vor dem Verfahrensschritt (f) durchgeführt wird.

7. Verfahren nach Anspruch 5, dadurch gekennzeichnet, daß der Verfahrensschritt (i) vor dem Verfahrensschritt (d) ausgeführt wird.

8. Verfahren nach einem der Ansprüche 1 bis 7, dadurch gekennzeichnet, daß vor der Heftung des oder jedes "L"-förmigen oder "T"-förmigen Unterbaues an die Platte, die Platte und der entsprechende Unterbau erwärmt werden.

9. Verbundstruktur mit einer Verbundplatte (32, 100) und einem Verbundunterbau bzw.-Profil (34, 36, 102), die durch Aushärtung aneinander gebunden sind, dadurch gekennzeichnet, daß das Profil zusätzlich durch Heftung entlang Bindelinien an der Platte befestigt ist.

10. Struktur nach Anspruch 9, dadurch gekennzeichnet, daß der Unterbau bzw. das Profil durch zwei "L"-förmige Verbundunterbauten (34, 36) gebildet ist, die durch Aushärtung an die Grundplatte (32) geheftet und gebonded sind, wobei die Schäfte der Verbundunterbauten voneinander seitlich beabstandet sind und einander gegenüberliegen, und daß ein Verbundstegelement (114) zwischen die vertikalen Standteile der beiden "L"-förmigen Unterbauten gebondet ist, welches das Profil bildet.

11. Struktur nach Anspruch 9, dadurch gekennzeichnet, daß der Unterbau bzw. das Profil ein umgekehrt "T"-förmiger Unterbau ist, der durch zwei "L"-förmige Verbundunterbauten (102) gebildet ist, die Rücken an Rücken aneinander stoßen und durch Aushärtung an die Platte (100) geheftet und gebonded sind, wobei die Schäfte zwischen benachbarte Schichten der Verbundstegelemente (110, 112) eingefügt und gebonded sind.

12. Struktur nach Anspruch 10, dadurch gekennzeichnet, daß sie eine zusätzliche mechanische Befestigungseinrichtung (116) zur weiteren Verbindung des Verbundstegelementes (114) mit dem Unterbau oder dem Profil (34, 36) aufweist.

13. Struktur nach einem der Ansprüche 9 bis 12, dadurch gekennzeichnet, daß die Heftungen in einem Winkel zum vertikalen Standteil und zum horizontalen Schenkel eines jeden "L"-förmigen Unterbaus angeordnet sind, der das Profil bildet.

FIG.1

FIG.2

FIG.3

FIG.4

FIG.5

FIG.6

FIG.7

FIG.8

110

112

102          102

100

104          106

FIG.9

114

116

104          106

FIG.10

110          112

120          122

102          102

100

FIG.11

FIG. 12